# EUROPÄISCHE PATENTSCHRIFT

(11) **EP 3 635 807 B1**
(45) Veröffentlichungstag und Bekanntmachung des Hinweises auf die Patenterteilung: **20.04.2022**
(21) Anmeldenummer: 18733179.8
(22) Anmeldetag: 30.05.2018
(51) Int. Cl.: H01M 10/0569, H01M 10/052, H01M 4/38, H01M 10/0568

(54) **ELEKTROLYT FÜR EINE ALKALI-SCHWEFEL-BATTERIE, ALKALI-SCHWEFEL-BATTERIE DENSELBEN ENTHALTEND, UND VERWENDUNG DES ELEKTROLYTEN**
ELECTROLYTE FOR AN ALKALI METAL-SULFUR-BATTERY, ALKALI METAL-SULFUR-BATTERY CONTAINING THE SAME, AND USE OF THE ELECTROLYTE
ÉLECTROLYTE POUR BATTERIE DE MÉTAL ALCALIN-SOUFRE, BATTERIE DE MÉTAL ALCALIN-SOUFRE CONTENANT CE DERNIER, ET UTILISATION DE L'ÉLECTROLYTE

(30) Priorität: 09.06.2017 DE 102017209790
(43) Veröffentlichungstag der Anmeldung: 15.04.2020
(73) Patentinhaber: Fraunhofer-Gesellschaft zur Förderung der angewandten Forschung e.V., 80686 München (DE)
(72) Erfinder: WELLER, Christine, 01097 Dresden (DE); ALTHUES, Holger, 01309 Dresden (DE); DÖRFLER, Susanne, 01309 Dresden (DE); KASKEL, Stefan, 01159 Dresden (DE)
(74) Vertreter: Pfenning, Meinig & Partner mbB
(86) Internationale Anmeldenummer: PCT/EP2018/064225
(87) Internationale Veröffentlichungsnummer: WO 2018/224374

(56) Entgegenhaltungen:
- EP-A1- 3 422 460
- EP-A1- 3 429 020
- EP-A2- 0 829 911
- WO-A1-2016/174394
- WO-A1-2017/183810
- US-A1- 2005 147 891
- US-A1- 2015 318 575

## Beschreibung

Es wird ein Elektrolyt für eine Alkali-Schwefel-Batterie (z.B. für eine Li-S-Batterie) bereitgestellt. Der Elektrolyt enthält einen unpolaren, acyklischen und nicht-fluorierten Ether, ein polar aprotisches, organisches Lösungsmittel und ein Leitsalz für eine Alkali-Schwefel-Batterie. Es wurde gefunden, dass beim Einsatz eines solchen Elektrolyten in einer Alkali-Schwefel-Batterie eine hohe Kapazität, eine geringe Überspannung, eine hohe Zyklenstabilität und eine hohe Coulomb-Effizienz bei der Alkali-Schwefel-Batterie erreicht werden kann und zudem verglichen mit einer Alkali-Schwefel-Batterie, die einen fluorierten Ether im Elektrolyt enthält, eine deutlich verbesserte gravimetrische Energiedichte erhalten wird. Eine Batterie mit dem Elektrolyten und Verwendungen des Elektrolyten werden vorgeschlagen.

In Lithium-Schwefel-Batterien kommt es zur Bildung von sogenannten Lithium-Polysulfiden (Li₂Sₙ, mit 2 ≤ n ≤ 8). Einige dieser Polysulfidspezies sind in den gebräuchlichen Elektrolyten (z. B. ein Gemisch aus DME:DOL mit einem Leitsalz) löslich. Die gelösten Polysulfide können den in Lithium-Schwefel-Batterien enthaltenen Separator zwischen Kathode und Anode durchdringen, wandern zur Anode und werden dort zu niederen Polysulfidspezies reduziert. Während des Ladevorgangs folgt der Reduktion der Polysulfide an der Anode eine Reoxidation an der Kathode, wodurch ein Kreislaufprozess entsteht, der die Coulomb-Effizienz des Akkumulators erheblich verringert (der sog. "polysulfide-shuttle"-Mechanismus).

Wird die Batterie im geladenen Zustand gelagert, kann es ebenfalls zur Bildung von löslichen Polysulfiden kommen, die an der Anode reduziert werden. Dadurch verringert sich die Kapazität der Zelle (Selbstentladung). Weiterhin verringert sich die Zyklenfestigkeit durch mit diesen Vorgängen verbundene, irreversible Prozesse.

Zudem erfordern die bekannten Elektrolytsysteme für die Wirkungsweise (vollständige Auflösung des Kathoden-Aktivmaterials) einen hohen Anteil an Lösungsmitteln in der Zelle. Damit nimmt der Elektrolyt den größten Gewichtsanteil im Vergleich zu den anderen Zellkomponenten ein. Für die Steigerung der Energiedichte ist somit ein neues Elektrolytkonzept unumgänglich.

Im Stand der Technik ist bekannt, dass der Zusatz von N-O-haltigen Verbindungen (wie z. B. LiNO₃) zu einer wesentlich verbesserten Coulomb-Effizienz und Zyklenfestigkeit führt (siehe z.B. US 7 354 680 B2). Der Wirkmechanismus der N-O-haltigen Verbindungen setzt offensichtlich an der Lithium-Anode an. Es wird angenommen, dass es durch die N-O-haltigen Verbindungen (z.B. Nitratverbindungen) zur Bildung von sulfitischen Spezies an der Oberfläche der Lithium-Anode kommt.

Der Zusatz von LiNO₃ oder anderen N-O-haltigen Verbindungen löst das Problem jedoch nicht umfassend, denn die Degradation der Anode wird durch die N-O-haltigen Verbindungen nicht vollständig verhindert, was die Zyklenfestigkeit der Zelle negativ beeinflusst. Ferner hat der Zusatz von LiNO₃ Einfluss auf die Zellchemie und führt möglicherweise zu unbekannten bzw. unerwünschten Nebenreaktionen. Darüberhinaus erhöht LiNO₃ das Gewicht des Elektrolyten und somit das Gesamtgewicht der Batterie, in welcher der Elektrolyt zum Einsatz kommt. Zudem wirken die N-O-haltigen Verbindungen nicht dauerhaft. Tatsächlich verbrauchen fortwährende Reparaturprozesse am Oberflächenfilm der Anode LiNO₃, sodass die Schutzwirkung von LiNO₃ kontinuierlich nachlässt.

Im Stand der Technik wurden fluorierte Ether (insbesondere TTE oder HFE) als Bestandteil von Elektrolyten verwendet, um den "polysulfide-shuttle"-Mechanismus zu unterdrücken (siehe z.B. WO 2013/141195 A1). Es wurde ein positiver Effekt durch die Verwendung des fluorierten Ethers nachgewiesen, aber es konnten lediglich Ausnutzungen des Aktivmaterials von < 70 % erreicht werden. Gerade beim Einsatz einer Batterie im mobilen Bereich ist ein Hauptnachteil der bekannten Lösung mit fluorierten Ethern der hohe Gewichtsanteil des Elektrolyten in den Zellen der Batterie. Der Grund hierfür ist, dass fluorierte Ether eine höhere spezifische Dichte als die entsprechenden unfluorierten Ether aufweisen. Bei gleichem Anteil eines bestimmten Ethers ist daher die gravimetrische Energiedichte der fluorierten Form des Ethers (d.h. mindestens ein H-Atom des Ethermoleküls ist durch ein F-Atom ausgetauscht) im Vergleich zu seiner nicht-fluorierten Form kleiner.

Die US 2015/0318575 A1 offenbart einen Elektrolyt für Lithium-Sekundärbatterien, der ein Lithiumsalz und ein nichtwässriges Lösungsmittel enthält, wobei das nichtwässrige Lösungsmittel ein Lösungsmittel auf Etherbasis und ein Lösungsmittel auf Glymebasis enthält.

Die EP 0 829 911 A2 offenbart einen nichtwässrigen Elektrolyten, der ein ternäres Lösungsmittelsystem umfasst, das vorzugsweise einen linearen Ether enthält, der mit einem Lösungsmittel mit hoher Permittivität und einem Lösungsmittel mit niedriger Viskosität gemischt ist.

Die WO 2016/174394 A1 offenbart eine Lithium-Schwefel-Zelle, die eine Anode, die Lithiummetall oder eine Lithiummetalllegierung aufweist, eine Kathode, die eine Mischung aus elektroaktivem Schwefelmaterial und festem elektrisch leitendem Material aufweist, und einen Elektrolyten enthält, der ein Lithiumsalz und ein organisches Lösungsmittel aufweist, das 0 bis weniger als 20 Gew .-% Sulfon enthält, wobei mindestens ein Teil der Anode eine Sulfonbeschichtung aufweist und der beschichtete Teil mit dem Elektrolyten in Kontakt steht.

Ausgehend hiervon war es die Aufgabe der vorliegenden Erfindung, einen Elektrolyt für eine Alkali-Schwefel-Batterie bereitzustellen, der nicht nur eine hohe Kapazität, hohe Zyklenfestigkeit, geringe Überspannung und hohe Coulomb-Effizienz aufweist, sondern zudem beim Einsatz in einer Batterie eine höhere gravimetrische Energiedichte bereitstellt.

Die Aufgabe wird gelöst durch die Alkali-Schwefel-Batterie gemäß Anspruch 1 und die Verwendung gemäß Anspruch 12.

Es wird ein Elektrolyt für eine Alkali-Schwefel-Batterie (z.B. für eine Lithium-Schwefel-Batterie) bereitgestellt, enthaltend
a) einen unpolaren, acyklischen Ether mit der chemischen Formel:

   X-O-Y

   wobei
   O ein Sauerstoffatom darstellt; und
   X und Y jeweils einen gesättigten oder ungesättigten, linearen oder cyklischen Kohlenwasserstoffrest darstellen;
b) ein polar aprotisches, organisches Lösungsmittel;
c) ein Leitsalz für eine Alkali-Schwefel-Batterie;
dadurch gekennzeichnet, dass es sich bei dem unpolaren, acyklischen Ether um einen nicht-fluorierten Ether handelt.

Unter einem nicht-fluorierten Ether wird ein Ether verstanden, der keine Fluoratome aufweist.

Es wurde gefunden, dass sich auch ohne die Verwendung fluorierter Ether ein vorteilhafter Elektrolyt für eine Alkali-Schwefel-Batterie bereitgestellt werden kann, indem statt den üblicherweise zur Unterdrückung des "polysulfideshuttle"-Mechanismus verwendeten fluorierten Ethern ein unpolarer, acyklischer, nicht-fluorierter Ether eingesetzt wird. Es wurde beobachtet, dass sich in diesem Fall auch durch diese Ether die Löslichkeit von Polysulfiden reduzieren lässt und damit der "polysulfid-shuttle"-Mechanismus unterdrücken lässt. Um gleichzeitig die niedrige Löslichkeit des Elektrolyts für Polysulfide aufrecht zu erhalten und eine ausreichende Löslichkeit des Leitsalzes im Elektrolyt sicherzustellen wird dem Elektrolyt zusätzlich ein polar aprotisches, organisches Lösungsmittel (bevorzugt ein Ether oder ein Sulfon) zugegeben.

Mit dem Elektrolyten wird beim Einsatz in Alkali-Schwefel-Batterien (z.B. Li-S-Batterien) eine hohe Kapazität, eine geringe Überspannung, eine hohe Zyklenstabilität und eine hohe Coulomb-Effizienz erhalten, wobei beim Einsatz des Elektrolyten in Batterien die gravimetrische Energiedichte verglichen mit Batterien mit fluorierten Ethern im Elektrolyten, verbessert ist. Vor allem bei Batterien im mobilen Einsatz ist dies ein entscheidender Vorteil. Darüberhinaus erlaubt die Mischung der organischen Lösungsmittel verschiedener Polarität eine Feinjustierung der Löslichkeitseigenschaften des Elektrolyten in Bezug auf das jeweils verwendete Leitsalz, was einerseits erlaubt, geringstmögliche Elektrolytmengen in einer Batterie einzusetzen und damit die gravimetrische Energiedichte weiter zu steigern und andererseits ermöglicht, eine höhere Ausbeute von Aktivmaterial zu erreichen.

Der Elektrolyt kann dadurch gekennzeichnet sein, dass die Kohlenstoffreste von X und Y des unpolaren, acyklischen, nicht-fluorierten Ethers zusammen mindestens fünf, bevorzugt mindestens sechs, besonders bevorzugt mindestens sieben, ganz besonders bevorzugt mindestens acht, insbesondere mindestens neun, optional mindestens zehn, Kohlenstoffatome aufweisen. Im Rahmen der vorliegenden Erfindung wird besonders durch diese Eigenschaft ein unpolarer Ether definiert. Je höher die Gesamtzahl der Kohlenstoffatome, desto höher der Siedepunkt des Ethers, was für den Einsatz des Elektrolyten in Alkali-Schwefel-Batterien vorteilhaft ist.

Ferner können die Kohlenstoffreste von X und Y des unpolaren, acyklischen, nicht-fluorierten Ethers zusammen maximal 20, bevorzugt 18, besonders bevorzugt maximal 16, ganz besonders bevorzugt maximal 14, insbesondere maximal 12, optional maximal 10, Kohlenstoffatome aufweisen. Eine geringe Anzahl an Kohlenstoffatomen ist insofern vorteilhaft, als sich mit abnehmender Anzahl der Kohlenstoffatome die Löslichkeit des Leitsalzes in dem Ether erhöht.

Der Kohlenstoffrest von X und/oder Y des unpolaren, acyklischen, nicht-fluorierten Ethers kann jeweils mindestens zwei, bevorzugt mindestens drei, besonders bevorzugt mindestens vier, ganz besonders bevorzugt mindestens fünf, optional mindestens sechs, Kohlenstoffatome aufweisen. Im Rahmen der vorliegenden Erfindung wird besonders durch diese Eigenschaft ein unpolarer Ether definiert. Eine höhere Anzahl an Kohlenstoffatomen des Kohlenstoffrests X und/oder Y bewirkt eine Erhöhung des Siedepunkts des Ethers und ist somit vorteilhaft für den Einsatz des Elektrolyten in Alkali-Schwefel-Batterien.

Ferner kann der Kohlenstoffrest von X und/oder Y des unpolaren, acyklischen, nicht-fluorierten Ethers maximal zehn, bevorzugt maximal acht, besonders bevorzugt maximal sechs, ganz besonders bevorzugt maximal fünf, insbesondere maximal vier, optional maximal drei, Kohlenstoffatome aufweisen. Je geringer die Anzahl der Kohlenstoffatome des Kohlenstoffrests X und/oder Y des unpolaren acyklischen, nicht-fluorierten Ethers, desto höher ist die Löslichkeit des Leitsalzes in dem Ether.

Der unpolare, acyklische, nicht-fluorierten Ethers kann eine Dichte von ≤ 1,4 g/cm³, bevorzugt ≤ 1,2 g/cm³, besonders bevorzugt ≤ 1,1 g/cm³, ganz besonders bevorzugt ≤ 1,0 g/cm³, insbesondere ≤ 0,9 g/cm³, optional ≤ 0,8 g/cm³ aufweisen. Je geringer die Dichte des Ethers, desto geringer sein spezifisches Gewicht und somit desto höher die gravimetrische Energiedichte der Alkali-Schwefel-Batterie, welche diesen Ether im Elektrolyt enthält.

Der unpolare, acyklische, nicht-fluorierte Ether kann ausgewählt sein aus der Gruppe bestehend aus Ethylpropylether, Dipropylether, Diisopropylether, Di-(1,2-Dimethylpropyl)ether, Methylbutylether, Ethylbutylether, Propylbutylether, Dibutylether, Diisobutylether, Methylpentylether, Ethylpentylether, Propylpentylether, Butylpentylether, Dipentylether, 1-(2,2-Dimethylpropoxy)-2,2-dimethylpropan, Diisopentylether, Methylhexylether, Ethylhexylether, Propylhexylether, Butylhexylether, Pentylhexylether, Dihexylether, Methoxycylohexan, Phenetol, 2-Methoxypropan, 2-Methoxybutan, 2-Methoxypentan, 2-Methoxyhexan, 2-Ethoxypropan, 2-Ethoxybutan, 2-Ethoxypentan, 2-Ethoxyhexan, und Mischungen.

In einer bevorzugten Ausgestaltungsform weist das polar aprotische, organische Lösungsmittel eine Donorzahl nach Gutmann von ≥ 14, bevorzugt von ≥ 16, besonders bevorzugt von ≥ 18, ganz besonders bevorzugt von ≥ 20, insbesondere von ≥ 22, optional von ≥ 24, auf. Das polar aprotische, organische Lösungsmittel kann eine Akzeptorzahl nach Gutmann von ≥ 8, bevorzugt von ≥ 9, besonders bevorzugt von ≥ 10, aufweisen. Im Rahmen der vorliegenden Erfindung wird besonders durch diese Eigenschaft ein polar aprotisches, orga-nisches Lösungsmittel definiert. Insbesondere unterscheidet sich die (nach Gutmann bestimmte) Donorzahl und/oder Akzeptorzahl des polar aprotischen, organischen Lösungsmittels von der (nach Gutmann bestimmten) Donorzahl und/oder Akzeptorzahl des unpolaren, acyklischen, nicht-fluorierte Ethers.

Das polar aprotische, organische Lösungsmittel des erfindungsgemäßen Elektrolyten kann ausgewählt sein aus der Gruppe bestehend aus Ethern enthaltend mindestens zwei O-Atome, Acetonitril, Pyridin, Dimethylsulfoxid, Tetrahydrofuran, Sulfon und Mischungen hiervon.

Besonders bevorzugt ist der Ether ein acyklischer Ether mit der chemischen Formel A-(O-B)ₙ-O-C, wobei O ein Sauerstoffatom darstellt und A, B und C jeweils einen gesättigten oder ungesättigten, linearen oder cyklischen, Kohlenwasserstoffrest darstellen, wobei B mindestens 2 Kohlenstoffatome enthält und n ≥ 1 ist, und wobei der Ether besonders bevorzugt ausgewählt ist aus der Gruppe bestehend aus 1,2-Dimethoxyethan, 1,3-Dioxolan, 2-Methoxyethylether, Bis(2-(2-methoxyethoxy)ethyl)ether und Mischungen hiervon. Ebenfalls besonders bevorzugt ist das Sulfon ausgewählt aus der Gruppe bestehend aus cyclischen oder nichtcyklischen, aliphatischen Sulfonen, bevorzugt Ethylmethylsulfon, Ethylvinylsulfon und/oder Butylsulfon, und cyklischen aliphatischen Sulfonen, bevorzugt Tetramethylensulfon, wobei das Sulfon optional ein fluoriertes Sulfon oder kein fluoriertes Sulfon ist.

Der Kohlenstoffrest B des Ethers kann maximal vier, bevorzugt maximal drei, besonders bevorzugt maximal zwei, Kohlenstoffatome aufweisen und/oder n kann ≤ 4 sein.

Das Volumenverhältnis von dem unpolaren, acyklischen, nicht-fluorierten Ether zu dem polar aprotischen, organischen Lösungsmittel beträgt 3:1 bis 9:1 (v:v).

Das Leitsatz des Elektrolyten kann ein Leitsalz für eine Lithium-Schwefel-Batterie sein. Bevorzugt ist das Leitsalz
i) ausgewählt aus der Gruppe bestehend aus LiPF₆, LiBF₄, LiClO₄, LiSO₃CF₃, LiN(SO₂F)₂,LiN(SO₂CF₃)₂^{(LiTFSI)}, LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCI, LiF, LiPF₅(SO₂CF₃), LiPF₄(SO₂CF₃)₂, und Mischungen hiervon, wobei das Leitsalz bevorzugt LiTFSI enthält oder daraus besteht; und/oder
ii) in einer Konzentration von maximal 4 mol/l, bevorzugt maximal 3 mol/l, besonders bevorzugt maximal 2,0 mol/l, optional 1,0 mol/l, im Elektrolyt enthalten.

Der Elektrolyt enthält bevorzugt kein LiNO₃.

Der Elektrolyt kann flüssig, gelförmig oder fest sein, bevorzugt flüssig oder gelförmig sein, besonders bevorzugt flüssig sein.

Erfindungsgemäß wird eine Alkali-Schwefel-Batterie, bevorzugt eine Lithium-Schwefel-Batterie, bereitgestellt, die einen Elektrolyt enthält, der für eine Alkali-Schwefel-Batterie geeignet ist, wobei der Elektrolyt
a) einen unpolaren, acyklischen Ether mit der chemischen Formel:

   X-O-Y

   wobei
   O ein Sauerstoffatom darstellt; und
   X und Y jeweils einen gesättigten oder ungesättigten, linearen oder cyklischen Kohlenwasserstoffrest darstellen;
b) ein polar aprotisches, organisches Lösungsmittel; und
c) ein Leitsalz für eine Alkali-Schwefel-Batterie;
enthält, wobei es sich bei dem unpolaren, acyklischen Ether um einen nicht-fluorierten Ether handelt,
dadurch gekennzeichnet dass das Volumenverhältnis von dem unpolaren, acyklischen, nicht-fluorierten Ether zu dem polar aprotischen, organischen Lösungsmittel 3:1 bis 9:1 (v:v) beträgt.

Die Alkali-Schwefel-Batterie (z.B. Lithium-Schwefet-Batterie) kann dadurch gekennzeichnet sein, dass sie eine Kathode aufweist, die Schwefelpartikel und ein Kohlenstoffmaterial enthält, bevorzugt Schwefelpartikel mit einer mittleren Partikelgröße von maximal 1 µm (gemessen mit Elektronenmikroskopie), wobei die Schwefelpartikel besonders bevorzugt homogen in dem Kohlen stoffmaterial der Kathode verteilt vorliegen, ganz besonders bevorzugt in Poren des Kohlenstoffmaterials vorliegen, insbesondere in Poren eines amorphen Kohlenstoffmaterials vorliegen. Die kleine Partikelgröße der Schwefelpartikel und ihre homogene Verteilung der Schwefelpartikel in Poren des Kohlenstoffmaterials verbessert die Kontaktoberfläche zwischen Kohlenstoffmaterial und Schwefelpartikel und damit die elektrochemische Zugänglichkeit des Aktivmaterials Schwefel an der Kathode.

Darüberhinaus wird vorgeschlagen, eine Zusammensetzung enthaltend oder bestehend aus Hexylmethylether und 1,2-Dimethoxyethan als Elektrolyt in einer Alkali-Schwefel-Batterie, bevorzugt als Elektrolyt in einer Lithium-Schwefel-Batterie, zu verwenden, wobei die Zusammensetzung optional ein Leitsalz für eine Alkali-Schwefel-Batterie enthält, bevorzugt ein Leitsalz für eine Lithium-Schwefel-Batterie, besonders bevorzugt LiTFSI.

Anhand der nachfolgenden Figuren und Beispiele soll der erfindungsgemäße Gegenstand näher erläutert werden, ohne diesen auf die hier dargestellten, spezifischen Ausführungsformen einschränken zu wollen.
Figur 1 zeigt beispielhaft mehrere in dem Elektrolyten verwendbare unfluorierte, unpolare, acyklische Ether und deren Eigenschaften bezüglich des Löslichkeitsvermögens des Leitsalzes LiTFSI, ihrer Dichte und ihres Schmelzpunktes und Siedepunktes.

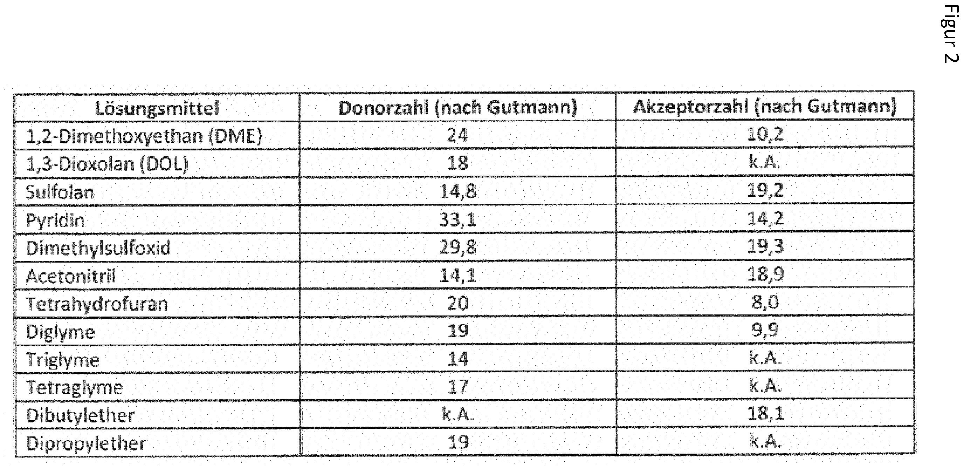

Figur 2 zeigt beispielhaft mehrere in dem Elektrolyten verwendbare polar aprotische, organische Lösungsmittel und deren Donorzahl und Akzeptorzahl nach Gutmann.
Figur 3 zeigt Ladekurven und Entladekurven für die Zyklen 1, 2, 5 und 10 einer Lithium-Schwefel Batterie, die einen Elektrolyten enthält und wie in Beispiel 3 offenbart hergestellt wurde.

### 1. Beispiel-Elektrolyt für Alkali-Schwefel-Batterie

Ein bevorzugter Elektrolyt für eine Alkali-Sch-wefel-Batterie (z.B. eine Li-S-Batterie) enthält:
80 Vol.-% Hexylmethylether
20 Vol.% 1,2-Dimethoxyethan
2 M LiTFSI

### 2. Beispiel - Konkrete Beispiele für unpolare, acyklische, nicht-fluorierte Ether

Beispielhaft werden im Folgenden einige unfluorierte, unpolare, acyklische Ether genannt, welche in dem Elektrolyten eingesetzt werden können:
▪ Methoxycyclohexan (Dichte 0,88 g/mL);
▪ Ethylpropylether (Dichte 0,88 g/mL);
▪ Butylethylether (Dichte 0,88 g/mL);
▪ Hexylmethylether (Dichte 0,88 g/mL);
▪ Dihexylether (Dichte 0,88 g/mL);
▪ Dibutylether (Dichte 0,88 g/mL);
▪ Diisopropylether (Dichte 0,88 g/mL);
▪ Phenetol (Dichte 0,88 g/mL).

Alle der oben genannten unfluorierten, unpolaren, acyklischen Ether weisen eine Dichte von ≤ 0,97 g/mL auf, welche deutlich unter der Dichte von im Stand der Technik verwendeten fluorierten, acyklischen Ethern liegt, deren Dichte gewöhnlich über 1,4 g/mL liegt.

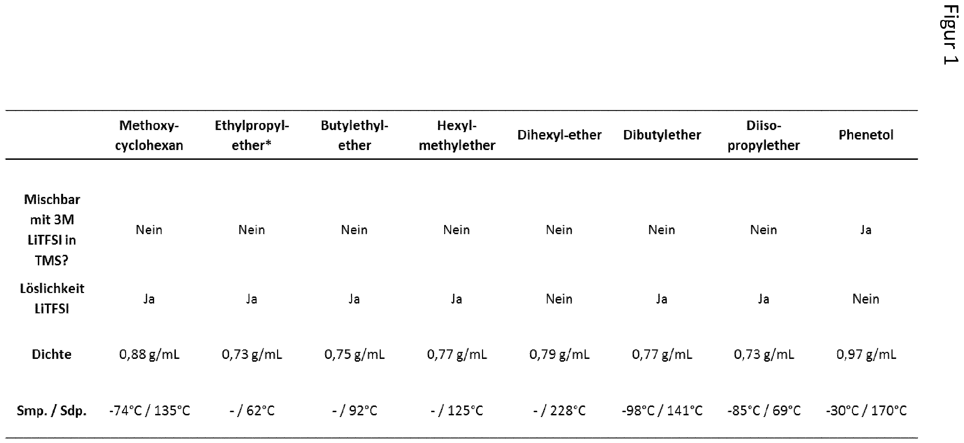

Eine Übersicht zu weiteren Eigenschaften dieser Ether findet sich in Figur 1.

### 3. Beispiel - Erfindungsgemäße Alkali-Schwefel-Batterie mit Elektrolyt

Zunächst wurde die -Kathode für die eine Li-S-Batterie als Alkali-Schwefel-- Batterie bereitgestellt, indem ein C/S-Komposit (1:2, *m:m*) durch Verschmelzen von Kohlenstoff (C) und Schwefel (S) in einem Trockenschrank bei 155°C für 30 minhergestellt wurde. Das C/S-Komposit (97 Gew.-%) wurde mit PTFE (3 Gew.-%) vermahlen und bei erhöhter Temperatur in einem Walzprozess zu einem Kathodenfilm verpresst. Anschließend erfolgt eine Lamination auf eine mit Kohlenstoff geprimerte Aluminiumfolie. Die Schwefelbeladung der Kathode betrug ca. 2,1 - 2,2 mg-S/cm², ihre Dichte ca. 0,5 g/cm³.

Im Anschluss wurde die bereitgestellte Kathode in einer Knopfzelle (CR2016) verbaut. Hierfür wurde eine Knopfzelle (CR2016) mit folgender Zusammensetzung assembliert:
- 1× Kathode (siehe oben), Durchmesser 15 mm;
- 1× Separator (Toray F12BMS), Durchmesser 19 mm;
- 1× 250 µm Lithiumfolie als Anode (China Energy Lithium), Durchmesser 16,5 mm;
- 1× 1 mm V2A-Abstandshalter (16 mm Durchmesser).

Für die Herstellung der Li-S-Batterie wurde anschließend der Knopfzelle ein Elektrolyt zugefügt, der aus 2 M LiTFSI (BASF, 99,9 %) in 80 Vol.-% Hexylmethylether (HME, TCI, min. 98%) und 20 Vol.-% 1,2-Dimethoxyethan (DME, BASF, 99,98%) bestand. Das Elektrolyt-Schwefelverhältnis betrug 5 µl-Elektrolyt/mg-Schwefel.

Nach der Herstellung wurde die Li-S-Batterie galvanostatisch gemessen. Die Zyklierung (Laden/Entladen) erfolgte zwischen 1,5 V und 2,8 V vs. Li/Li+ mit einer Rate von C/10. Im ersten Entladeschritt erfolgte eine Formierung der Zelle bei einer Entladung mit einer Rate von C/20.

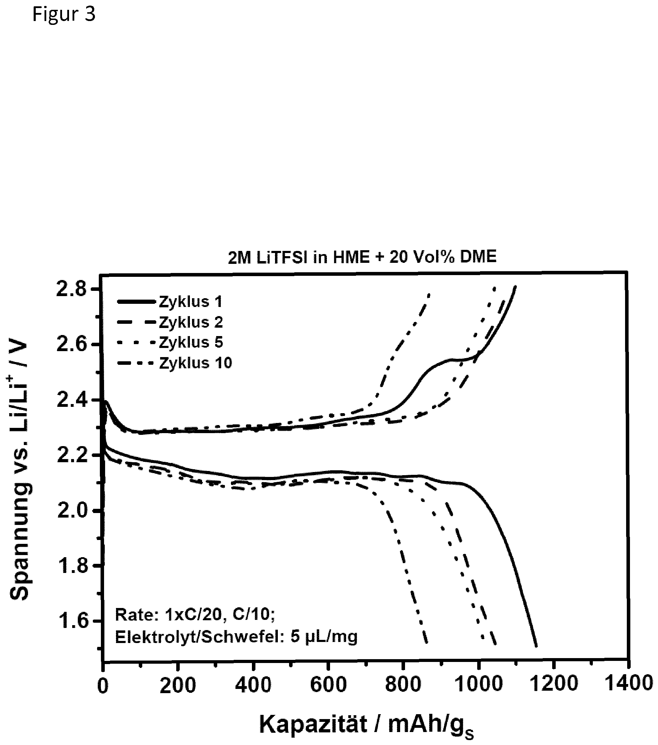

Das Ergebnis ist in Figur 3 dargestellt. Die dargestellten Lade-/ Entladekurven zeigen die Zyklen 1, 2, 5 und 10.

Im Entladen wurde bei Verwendung des Elektrolyten 2 M LiTFSI in dem unpolaren, acyklischen, nicht-fluorierten Ether Hexylmethylether (HME) und dem Ether 1,2-Dimethoxyethan (DME) (8:2, *v:v*) eine Entladespannung von durchgängig ca. 2,1 V vs. Li/Li⁺ erreicht. Ein ausgeprägtes erstes Plateau bei 2,1 V bis 2,3 V vs. Li/Li⁺ wird mit diesem Elektrolyt nicht erhalten.

Im Ladevorgang wurde zunächst ein hohes Überpotential beobachtet, welches durch eine Li₂S-Aktivierung zu Beginn des Ladeprozesses hervorgerufen wird. Auch beim Laden zeigt sich ein ausgeprägtes Plateau bei ca. 2,3 V vs. Li/Li⁺.

Die Unterdrückung eines zweiten Plateaus im Laden bzw. Entladen spricht für eine Unterdrückung langkettiger Polysulfide, wodurch gezeigt ist, dass durch den Elektrolyten der "polysulfide shuttle"-Mechanismus auch ohne die Zugabe weiterer Additive erfolgreich unterdrückt werden kann.

## Patentansprüche

1. Alkali-Schwefel-Batterie enthaltend einen Elektrolyt, der für eine Alkali-Schwefel-Batterie geeignet ist, wobei der Elektrolyt
a) einen unpolaren, acyklischen Ether mit der chemischen Formel:
X-O-Y
wobei
O ein Sauerstoffatom darstellt; und
X und Y jeweils einen gesättigten oder ungesättigten, linearen oder cyklischen Kohlenwasserstoffrest darstellen;
b) ein polar aprotisches, organisches Lösungsmittel; und
c) ein Leitsalz für eine Alkali-Schwefel-Batterie;
enthält, wobei es sich bei dem unpolaren, acyklischen Ether um einen nicht-fluorierten Ether handelt,
**dadurch gekennzeichnet dass** das Volumenverhältnis von dem unpolaren, acyklischen, nicht-fluorierten Ether zu dem polar aprotischen, organischen Lösungsmittel 3:1 bis 9:1 (v:v) beträgt.

2. Alkali-Schwefel-Batterie gemäß Anspruch 1, **dadurch gekennzeichnet, dass** die Kohlenstoffreste von X und Y zusammen
i) mindestens fünf, bevorzugt mindestens sechs, besonders bevorzugt mindestens sieben, ganz besonders bevorzugt mindestens acht, insbesondere mindestens neun, optional mindestens zehn, Kohlenstoffatome aufweisen; und/oder
ii) maximal 20, bevorzugt 18, besonders bevorzugt maximal 16, ganz besonders bevorzugt maximal 14, insbesondere maximal 12, optional maximal 10, Kohlenstoffatome aufweisen.

3. Alkali-Schwefel-Batterie gemäß einem der vorhergehenden Ansprüche, **dadurch gekennzeichnet, dass** der Kohlenstoffrest von X und/oder Y jeweils
i) mindestens zwei, bevorzugt mindestens drei, besonders bevorzugt mindestens vier, ganz besonders bevorzugt mindestens fünf, optional mindestens sechs, Kohlenstoffatome aufweist; und/oder
ii) maximal zehn, bevorzugt maximal acht, besonders bevorzugt maximal sechs, ganz besonders bevorzugt maximal fünf, insbesondere maximal vier, optional maximal drei, Kohlenstoffatome aufweist.

4. Alkali-Schwefel-Batterie gemäß einem der vorhergehenden Ansprüche, **dadurch gekennzeichnet, dass** der unpolare, acyklische, nicht-fluorierte Ether eine Dichte von ≤ 1,4 g/cm³, bevorzugt ≤ 1,2 g/cm³, besonders bevorzugt ≤ 1,1 g/cm³, ganz besonders bevorzugt ≤ 1,0 g/cm³, insbesondere ≤ 0,9 g/cm³, optional ≤ 0,8 g/cm³ aufweist.

5. Alkali-Schwefel-Batterie gemäß einem der vorhergehenden Ansprüche, **dadurch gekennzeichnet, dass** der unpolare, acyklische, nicht-fluorierte Ether ausgewählt ist aus der Gruppe bestehend aus Ethylpropylether, Dipropylether, Diisopropylether, Di-(1,2-Dimethylpropyl)ether, Methylbutylether, Ethylbutylether, Propylbutylether, Dibutylether, Diisobutylether, Methylpentylether, Ethylpentylether, Propylpentylether, Butylpentylether, Dipentylether, 1-(2,2-Dimethylpropoxy)-2,2-dimethylpropan, Diisopentylether, Methylhexylether, Ethylhexylether, Propylhexylether, Butylhexylether, Pentylhexylether, Dihexylether, Methoxycylohexan, Phenetol, 2-Methoxypropan, 2-Methoxybutan, 2-Methoxypentan, 2-Methoxyhexan, 2-Ethoxypropan, 2-Ethoxybutan, 2-Ethoxypentan, 2-Ethoxyhexan, und Mischungen hiervon.

6. Alkali-Schwefel-Batterie gemäß einem der vorhergehenden Ansprüche, **dadurch gekennzeichnet, dass** das polar aprotische, organische Lösungsmittel eine
i) Donorzahl nach Gutmann von ≥ 14, bevorzugt von ≥ 16, besonders bevorzugt von ≥ 18, ganz besonders bevorzugt von ≥ 20, insbesondere von ≥ 22, optional von ≥ 24, aufweist; und/oder
ii) eine Akzeptorzahl nach Gutmann von ≥ 8, bevorzugt von ≥ 9, besonders bevorzugt von ≥ 10, aufweist.

7. Alkali-Schwefel-Batterie gemäß einem der vorhergehenden Ansprüche , **dadurch gekennzeichnet, dass** das polar aprotische, organische Lösungsmittel ausgewählt ist aus der Gruppe bestehend aus Ethern enthaltend mindestens zwei O-Atome, Acetonitril, Pyridin, Dimethylsulfoxid, Tetrahydrofuran, Sulfon und Mischungen hiervon, wobei
i) der Ether besonders bevorzugt ein acyklischer Ether mit der chemischen Formel A-(O-B)ₙ-O-C ist, wobei O ein Sauerstoffatom darstellt und A, B und C jeweils einen gesättigten oder ungesättigten, linearen oder cyklischen Kohlenwasserstoffrest darstellen, wobei B mindestens 2 Kohlenstoffatome enthält und n ≥ 1 ist, und wobei der Ether besonders bevorzugt ausgewählt ist aus der Gruppe bestehend aus 1,2-Dimethoxyethan, 1,3-Dioxolan, 2-Methoxyethylether, Bis(2-(2-methoxyethoxy)ethyl)ether und Mischungen hiervon; und/oder
ii) das Sulfon besonders bevorzugt ausgewählt ist aus der Gruppe bestehend aus cyclischen oder nichtcyklischen, aliphatischen Sulfonen, bevorzugt Ethylmethylsulfon, Ethylvinylsulfon und/oder Butylsulfon, und cyklischen aliphatischen Sulfonen, ganz besonders bevorzugt Tetramethylensulfon, wobei das Sulfon optional ein fluoriertes Sulfon oder kein fluoriertes Sulfon ist.

8. Alkali-Schwefel-Batterie gemäß Anspruch 7, **dadurch gekennzeichnet, dass** der Kohlenstoffrest B des Ethers maximal vier, bevorzugt maximal drei, besonders bevorzugt maximal zwei, Kohlenstoffatome aufweist und/oder n ≤ 4 ist.

9. Alkali-Schwefel-Batterie gemäß einem der vorhergehenden Ansprüche, **dadurch gekennzeichnet, dass** das Leitsalz
i) ausgewählt ist aus der Gruppe bestehend aus LiPF₆, LiBF₄, LiClO₄, LiSO₃CF_{3,} LiN(SO₂F)₂, LiN(SO₂CF₃)₂(LiTFSI), LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCl, LiF, LiPF₅(SO₂CF₃), LiPF₄(SO₂CF₃)₂, und Mischungen hiervon, wobei das Leitsalz bevorzugt LiTFSI enthält oder daraus besteht; und/oder
ii) in einer Konzentration von maximal 4 mol/l, bevorzugt maximal 3 mol/l, besonders bevorzugt maximal 2 mol/l, optional 1,0 mol/l, enthalten ist.

10. Alkali-Schwefel-Batterie gemäß einem der vorhergehenden Ansprüche, **dadurch gekennzeichnet, dass** der Elektrolyt
i) kein LiNO₃ enthält; und/oder
ii) flüssig, gelförmig oder fest ist, bevorzugt flüssig oder gelförmig ist, besonders bevorzugt flüssig ist.

11. Alkali-Schwefel-Batterie gemäß einem der vorhergehenden Ansprüche, **dadurch gekennzeichnet, dass** sie eine Kathode aufweist, die Schwefelpartikel und ein Kohlenstoffmaterial enthält, bevorzugt Schwefelpartikel mit einer mittleren Partikelgröße von maximal 1 µm, wobei die Schwefelpartikel besonders bevorzugt homogen in dem Kohlenstoffmaterial der Kathode verteilt vorliegen, ganz besonders bevorzugt in Poren des Kohlenstoffmaterials vorliegen, insbesondere in Poren eines amorphen Kohlenstoffmaterials vorliegen.

12. Verwendung einer Zusammensetzung enthaltend oder bestehend aus Hexylmethylether und 1,2-Dimethoxyethan als Elektrolyt in einer Alkali-Schwefel-Batterie, bevorzugt als Elektrolyt in einer Lithium-Schwefel-Batterie, wobei die Zusammensetzung optional ein Leitsalz für eine Alkali-Schwefel-Batterie enthält, bevorzugt ein Leitsalz für eine Lithium-Schwefel-Batterie, besonders bevorzugt LiTFSI.

## Claims

1. Alkali-sulfur battery containing an electrolyte that is suitable for an alkali-sulfur battery, wherein the electrolyte comprises
a) a nonpolar, acyclic ether with the chemical formula:
X-O-Y
wherein
O is an oxygen atom; and
X and Y are each a saturated or unsaturated linear or cyclic hydrocarbon residue;
b) a polar aprotic organic solvent; and
c) a conductive salt for an alkali-sulfur battery,
wherein the nonpolar acyclic ether is a non-fluorinated ether,
**characterized in that** the volume ratio of the nonpolar, acyclic, non-fluorinated ether to the polar aprotic, organic solvent is 3:1 to 9:1 (v/v).

2. Alkali-sulfur battery in accordance with claim 1, **characterized in that** the carbon residues of X and Y together have
i) at least five, preferably at least six, particularly preferably at least seven, very particularly preferably at least eight, in particular at least nine, optionally at least ten, carbon atoms; and/or have
ii) a maximum of 20, preferably of 18, particularly preferably a maximum of 16, very particularly preferably a maximum of 14, in particular a maximum of 12, optionally a maximum of 10, carbon atoms.

3. Alkali-sulfur battery in accordance with one of the preceding claims, **characterized in that** the carbon residue of X and/or Y respectively has
i) at least two, preferably at least three, particularly preferably at least four, very particularly preferably at least five, optionally at least six, carbon atoms; and/or
ii) a maximum of ten, preferably a maximum of eight, particularly preferably a maximum of six, very particularly preferably a maximum of five, in particular a maximum of four, optionally a maximum of three, carbon atoms.

4. Alkali-sulfur battery in accordance with one of the preceding claims, **characterized in that** the nonpolar, acyclic, non-fluorinated ether has a density of ≤ 1.4 g/cm³, preferably of ≤ 1.2 g/cm³, particularly preferably of ≤ 1.1 g/cm³, very particularly preferably of ≤ 1.0 g/cm³, in particular of ≤ 0.9 g/cm³, and optionally of ≤ 0.8 g/cm³.

5. Alkali-sulfur battery in accordance with one of the preceding claims, **characterized in that** the nonpolar, acyclic, non-fluorinated ether is selected from the group consisting of ethyl propyl ether, dipropyl ether, diisopropyl ether, di-(1,2-dimethyl propyl) ether, methyl butyl ether, ethyl butyl ether, propyl butyl ether, dibutyl ether, diisobutyl ether, methyl pentyl ether, ethyl pentyl ether, propyl pentyl ether, butyl pentyl ether, dipentyl ether, 1-(2,2-dimethyl propoxy)-2,2-dimethyl propane, diisopentyl ether, methyl hexyl ether, ethyl hexyl ether, propyl hexyl ether, butyl hexyl ether, pentyl hexyl ether, dihexyl ether, methoxy cylohexane, phenetol, 2-methoxy propane, 2-methoxy butane, 2-methoxy pentane, 2-methoxy hexane, 2-ethoxy propane, 2-ethoxy butane, 2-ethoxy pentane, 2-ethoxy hexane, and mixtures thereof.

6. Alkali-sulfur battery in accordance with one of the preceding claims, **characterized in that** the polar aprotic, organic solvent has
i) a Gutmann donor number of ≥ 14, preferably of ≥ 16, particularly preferably of ≥ 18, very particularly preferably of ≥ 20, in particular of ≥ 22, optionally of ≥ 24; and/or has
ii) a Gutmann acceptor number of ≥ 8, preferably of ≥ 9, particularly preferably of ≥ 10.

7. Alkali-sulfur battery in accordance with one of the preceding claims, **characterized in that** the polar aprotic, organic solvent is selected from the group consisting of ethers containing at least two O atoms, acetonitrile, pyridine, dimethyl sulfoxide, tetrahydrofuran, sulfone, and mixtures thereof, wherein
i) the ether is particularly preferably an acyclic ether having the chemical formula A-(O-B)ₙ-O-C, wherein O is an oxygen atom and A, B, and C each represent a saturated or unsaturated linear or cyclic hydrocarbon residue, wherein B includes at least 2 carbon atoms and n ≥ 1, and wherein the ether is particularly preferably selected from the group consisting of 1,2-dimethoxyethane, 1,3-dioxolane, 2-methoxyethyl ether, bis(2-(2-methoxy ethoxy)ethyl) ether and mixtures thereof; and/or
ii) the sulfone is particularly preferably selected from the group consisting of cyclic or non-cyclic, aliphatic sulfones, preferably ethyl methyl sulfone, ethyl vinyl sulfone, and/or butyl sulfone, and cyclic aliphatic sulfones, very particularly preferably tetra methylene sulfone, wherein the sulfone is optionally a fluorinated sulfone or not a fluorinated sulfone.

8. Alkali-sulfur battery in accordance with claim 7, **characterized in that** the carbon residue B of the ether has a maximum of four, preferably a maximum of three, particularly preferably a maximum of 2, carbon atoms and/or n is ≤ 4.

9. Alkali-sulfur battery in accordance with one of the preceding claims, **characterized in that** the conductive salt
i) is selected from the group consisting of LiPF₆, LiBF₄, LiClO₄, LiSO₃CF₃, LiN(SO₂F)₂, LiN(SO₂CF₃)₂ (LiTFSI), LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCI, LiF, LiPF₅(SO₂CF₃), LiPF₄(SO₂CF₃)₂, LiTFSI, and mixtures thereof, wherein the conductive salt preferably comprises or consists of LiTFSI ; and/or
ii) is contained in a concentration of a maximum of 4 mol/l, preferably a maximum of 3 mol/l, particularly preferably a maximum of 2 mol/l, optionally of 1.0 mol/l.

10. Alkali-sulfur battery in accordance with one of the preceding claims, **characterized in that** the electrolyte
i) does not contain LiNO_{3;} and/or
ii) is liquid, of gel form, or solid, preferably liquid or of gel form, particularly preferably liquid.

11. Alkali-sulfur battery in accordance with one of the preceding claims, **characterized in that** it comprises a cathode that contains sulfur particles and a carbon material, preferably sulfur particles having a mean particle size of a maximum of 1 µm, wherein the sulfur particles are particularly preferably present distributed homogeneously in the carbon material of the cathode, are very particularly preferably present in pores of the carbon material, are in particular present in pores of an amorphous carbon material.

12. Use of a composition comprising or consisting of hexylmethyl ether and 1,2-dimethoxyethane as an electrolyte in an alkali-sulfur battery, preferably as an electrolyte in a lithium sulfur battery, wherein the composition optionally contains a conductive salt for an alkali-sulfur battery, preferably a conductive salt for a lithium sulfur battery, particularly preferably LiTFSI.

## Revendications

1. Batterie alcaline au soufre contenant un électrolyte, qui est adapté pour une batterie alcaline au soufre, dans laquelle l'électrolyte
a) contient un éther acyclique, non polaire avec la formule chimique :
X-O-Y
dans laquelle
O représente un atome d'oxygène ; et
X et Y représentent respectivement un radical hydrocarboné saturé ou insaturé, linéaire ou cyclique ;
b) un solvant organique polaire aprotique ; et
c) un sel conducteur pour une batterie alcaline au soufre ;
dans laquelle il s'agit pour l'éther acyclique, non polaire d'un éther non fluoré,
**caractérisée en ce que** le rapport volumique de l'éther acyclique, non polaire, non fluoré sur le solvant organique polaire aprotique atteint 3:1 à 9:1 (v:v).

2. Batterie alcaline au soufre selon la revendication 1, **caractérisée en ce que** les radicaux carbonés de X et Y présentent conjointement
i) au moins cinq, de préférence au moins six, de manière particulièrement préférée au moins sept, idéalement au moins huit, en particulier au moins neuf, éventuellement au moins dix, atomes de carbone ; et/ou
ii) au maximum 20, de préférence 18, de manière particulièrement préférée au maximum 16, idéalement au maximum 14, en particulier au maximum 12, éventuellement au maximum 10, atomes de carbone.

3. Batterie alcaline au soufre selon l'une quelconque des revendications précédentes,
**caractérisée en ce que** le radical carboné de X et/ou Y présente respectivement
i) au moins deux, de préférence au moins trois, de manière particulièrement préférée au moins quatre, idéalement au moins cinq, éventuellement au moins six, atomes de carbone ; et/ou
ii) au maximum dix, de préférence au maximum huit, de manière particulièrement préférée au maximum six, idéalement au maximum cinq, en particulier au maximum quatre, éventuellement au maximum trois, atomes de carbone.

4. Batterie alcaline au soufre selon l'une quelconque des revendications précédentes, **caractérisée en ce que** l'éther acyclique, non polaire, non fluoré présente une densité ≤ 1,4 g/cm³, de préférence ≤ 1,2 g/cm³, de manière particulièrement préférée ≤ 1,1 g/cm³, idéalement ≤ 1,0 g/cm³, en particulier ≤ 0,9 g/cm³, éventuellement ≤ 0,8 g/cm³.

5. Batterie alcaline au soufre selon l'une quelconque des revendications précédentes, **caractérisée en ce que** l'éther acyclique, non polaire, non fluoré est sélectionné dans le groupe constitué d'éthylpropyléther, dipropyléther, diisopropyléther, di-(1,2-diméthylpropyléther, méthylbutyléther, éthylbutyléther, propylbutyléther, dibutyléther, diisobutyléther, méthylpentyléther, éthylpentyléther, propylpentyléther, butylpentyléther, dipentyléther, 1-(2,2-diméthylpropoxy)-2,2-diméthylpropane, diisopentyléther, méthyl-hexyléther, éthylhexyléther, propylhexyléther, butylhexyléther, pentylhexyléther, dihexyléther, méthoxycylohexane, phénétol, 2-méthoxypropane, 2-méthoxybutane, 2-méthoxypentane, 2-méthoxyhexane, 2-éthoxypropane, 2-éthoxybutane, 2-éthoxypentane, 2-éthoxyhexane, et des mélanges de ceux-ci.

6. Batterie alcaline au soufre selon l'une quelconque des revendications précédentes, **caractérisée en ce que** le solvant organique polaire aprotique présente un
i) nombre donneur selon Gutmann ≥ 14, de préférence ≥ 16, de manière particulièrement préférée ≥ 18, idéalement ≥ 20, en particulier ≥ 22, éventuellement ≥ 24 ; et/ou
ii) un nombre accepteur selon Gutmann ≥ 8, de préférence ≥ 9, de manière particulièrement préférée ≥ 10.

7. Batterie alcaline au soufre selon l'une quelconque des revendications précédentes, **caractérisée en ce que** le solvant organique polaire aprotique est sélectionné dans le groupe constitué d'éthers contenant au moins deux atomes O, acétonitrile, pyridine, diméthylsulfoxyde, tétrahydrofurane, sulfone et des mélanges de ceux-ci, dans laquelle
i) l'éther est de manière particulièrement préférée un éther acyclique avec la formule chimique A-(O-B)ₙ-O-C, dans laquelle O représente un atome d'oxygène et A, B et C représentent respectivement un radical hydrocarboné saturé ou insaturé, linéaire ou cyclique, dans laquelle B contient au moins 2 atomes de carbone et n ≥ 1, et dans laquelle l'éther est de manière particulièrement préférée sélectionné dans le groupe constitué de 1,2-diméthoxyéthane, 1,3-dioxolane, 2-méthoxyéthyléther, bis(2-(2-méthoxyéthoxy)éthyl)éther et des mélanges de ceux-ci ;
et/ou
ii) le sulfone est de manière particulièrement préférée sélectionné dans le groupe constitué de sulfones cycliques ou non cycliques, aliphatiques, de préférence d'éthylméthylsulfone, éthylvinylsulfone et/ou butylsulfone, et de sulfones aliphatiques cycliques, de manière particulièrement préférée de tétraméthylènsulfone, dans laquelle le sulfone éventuellement est un sulfone fluoré ou n'est pas un sulfone fluoré.

8. Batterie alcaline au soufre selon la revendication 7, **caractérisée en ce que** le radical carboné B de l'éther présente au maximum quatre, de préférence au maximum trois, de manière particulièrement préférée au maximum deux, atomes de carbone et/ou n ≤ 4.

9. Batterie alcaline au soufre selon l'une quelconque des revendications précédentes, **caractérisée en ce que** le sel conducteur
i) est sélectionné dans le groupe constitué de LiPF₆, LiBF₄, LiClO₄, LiSO₃CF₃, LiN(SO₂F)₂, LiN(SO₂CF₃)₂ (LiTFSI), LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCl, LiF, LiPF₅(SO₂CF₃), LiPF₄(SO₂CF₃)₂, et de mélanges de ceux-ci, dans laquelle le sel conducteur contient de préférence LiTFSI ou en est constitué ;
et/ou
ii) est contenu dans une concentration de maximum 4 mol/l, de préférence de maximum 3 mol/l, de manière particulièrement préférée de maximum 2 mol/l, éventuellement de 1,0 mol/l.

10. Batterie alcaline au soufre selon l'une quelconque des revendications précédentes, **caractérisée en ce que** l'électrolyte
i) ne contient pas de LiNO₃ ; et/ou
ii) est liquide, géliforme ou solide, est de préférence liquide ou géliforme, est de manière particulièrement préférée liquide.

11. Batterie alcaline au soufre selon l'une quelconque des revendications précédentes, **caractérisée en ce qu'**elle présente une cathode, qui contient des particules de soufre et un matériau carboné, de préférence des particules de soufre avec une taille de particules moyenne de maximum 1 pm, dans laquelle les particules de soufre sont présentes de manière particulièrement préférée de façon homogène dans le matériau carboné de la cathode, sont présentes idéalement dans les pores du matériau carboné, sont présentes en particulier dans les pores d'un matériau carboné amorphe.

12. Utilisation d'une composition contenant ou constituée d'hexylméthyléther et de 1,2-diméthoxyéthane comme électrolyte dans une batterie alcaline au soufre, de préférence comme électrolyte dans une batterie lithium-soufre, dans laquelle la composition contient éventuellement un sel conducteur pour une batterie alcaline au soufre, de préférence un sel conducteur pour une batterie lithium-soufre, plus particulièrement LiTFSI.
